# FASCICULE DE BREVET EUROPEEN

(11) **EP 1 897 705 B1**
(45) Date de publication et mention de la délivrance du brevet: **29.07.2009**
(21) Numéro de dépôt: 07291362.7
(22) Date de dépôt: 13.06.2007
(51) Int. Cl.: B60C 17/06

(54) **Dispositif de roulage à plat pour véhicule automobile et ensemble monté l'incorporant.**
Runflat-Vorrichtung für Kraftfahrzeug und damit ausgestattete montierte Einheit
Run flat device for an automobile vehicle and installed assembly comprising same.

(30) Priorité: 12.09.2006 FR 0607954
(43) Date de publication de la demande: 12.03.2008
(62) Demande divisionnaire de: 07290739.7
(73) Titulaire: Hutchinson, 75008 Paris (FR)
(72) Inventeur: Heuze, Olivier, 95290 l'Isle Adam (FR); Ratet, Florence, 45120 Chalette sur Loing (FR)
(74) Mandataire: Bolinches, Michel Jean-Marie

(56) Documents cités:
- EP-A- 1 514 703
- EP-A- 1 522 427
- EP-A- 1 541 384
- GB-A- 2 417 225
- JP-A- 6 344 733
- JP-A- 54 059 702
- US-A1- 5 012 849

## Description

La présente invention concerne un dispositif de roulage à plat destiné à équiper un ensemble monté sans chambre à air pour véhicule automobile et un tel ensemble monté incorporant ce dispositif, permettant de parcourir une distance importante à vitesse relativement élevée lorsque l'ensemble monté est partiellement ou totalement dégonflé. Ce dispositif de roulage à plat est notamment utilisable pour équiper un véhicule militaire destiné à évoluer sur tous types de sols incluant des sols sablonneux.

Les dispositifs de roulage à plat connus sont généralement constitués par un anneau de soutien monté avec jeu autour d'une jante de roue à l'intérieur d'une enveloppe de pneumatique. Cet anneau, constitué d'une matière souple, est d'un seul tenant et il exerce du fait de sa largeur à sa base un effort de plaquage de l'enveloppe sur la jante. On utilise parfois des dispositifs rigides en plusieurs secteurs qui sont fixés deux à deux.

Le document EP-A-1 541 384 au nom de la Demanderesse présente un dispositif de roulage à plat pour ensemble monté comprenant une jante à plusieurs blocs, comprenant un anneau de soutien destiné à être monté autour de la jante et divisé en au moins deux secteurs d'anneau, et des moyens de blocage des talons de l'enveloppe contre les rebords de jante qui sont destinés à relier les secteurs d'anneau à ces talons, en vue d'assurer la motricité de l'ensemble monté en cas de pression réduite dans ce dernier.

Un but de la présente invention est de proposer un dispositif de roulage à plat destiné à équiper un ensemble monté sans chambre à air pour véhicule automobile qui comporte une jante de roue à plusieurs blocs et une enveloppe de pneumatique comportant des talons montés contre des rebords de la jante, ce dispositif comprenant :
- une structure annulaire de soutien qui est destinée à être montée autour de la jante en vue de soutenir l'enveloppe, suite à une chute de pression de gonflage à l'intérieur de l'ensemble monté, et qui est divisée en au moins deux secteurs d'anneau adaptés pour former ladite structure par juxtaposition dans la direction circonférentielle de cette dernière, et
- des moyens de blocage des talons contre lesdits rebords qui sont destinés à relier ladite structure annulaire de soutien auxdits talons,
dispositif qui permette d'améliorer la souplesse axiale en roulage à plat des dispositifs connus, notamment lors de chocs latéraux appliqués à l'ensemble monté.

A cet effet, un dispositif selon l'invention est tel que chaque secteur d'anneau comporte au moins deux éléments rigides de soutien qui sont superposés dans la direction radiale de la structure et qui sont séparés deux à deux entre eux par une couche élastique à base de caoutchouc, laquelle est adaptée pour permettre, par son cisaillement lors d'un effort latéral appliqué à la structure, un déplacement axial de l'élément de soutien radialement extérieur par rapport à l'élément de soutien radialement intérieur.

On notera qu'aucun de ces éléments de soutien superposés qui sont séparés radialement par la couche élastique ne pénètre (i.e. n'est ancré) dans cette couche élastique. Ainsi, selon la présente invention, la totalité de l'élément de soutien radialement extérieur est localisée radialement à l'extérieur de la face radialement externe de cette couche élastique.

Selon une autre caractéristique de l'invention, ladite ou chaque couche élastique peut s'étendre sensiblement sur toute la largeur axiale desdits éléments de soutien qu'elle sépare radialement.

Selon un exemple de réalisation de l'invention, ladite ou chaque couche élastique est constituée d'une composition de caoutchouc.

Selon un autre exemple de réalisation de l'invention, ladite ou chaque couche élastique est constituée d'un composite caoutchouc / armature de renforcement métallique. Dans ce cas, ladite armature de renforcement peut comporter au moins une tôle en arc de cylindre qui est par exemple sensiblement parallèle aux faces radialement intérieure et extérieure de ladite ou chaque couche élastique.

Selon une autre caractéristique de l'invention, lesdits moyens de blocage peuvent comporter au moins une paire de cales annulaires qui sont chacune à base de caoutchouc renforcé par un élément de renforcement circonférentiel et qui sont respectivement destinées à être montées au contact des deux faces latérales de ladite structure de soutien.

Avantageusement, chacune desdites cales peut être formée d'un seul tenant et peut comporter une face d'appui qui est appliquée contre une zone d'appui radialement intérieure de l'une desdites faces latérales de ladite structure de soutien. De préférence, chacune desdites cales présente alors une section axiale sensiblement en forme de trapèze dont des petite et grande bases définissent respectivement des faces radialement intérieure et extérieure desdits moyens de blocage.

Selon une autre caractéristique de l'invention, les deux éléments rigides de soutien situés de part et d'autre de ladite couche élastique peuvent présenter respectivement deux parois dont les faces radialement externe et interne s'étendent axialement d'un bord latéral à l'autre de ladite couche élastique.

Avantageusement, l'un au moins desdits éléments rigides de soutien, par exemple l'élément de soutien radialement extérieur, peut présenter une paroi dont les deux faces radialement interne et externe sont reliées entre elles par une portion radiale de liaison, de sorte à conférer à ladite paroi une section axiale sensiblement en forme de « I ».

Selon un premier exemple de réalisation de l'invention, lesdits éléments rigides de soutien présentent chacun ou indépendamment l'un de l'autre une paroi de section axiale sensiblement rectangulaire ou trapézoïdale délimitant un ou plusieurs compartiment(s) interne(s).

Conformément à ce premier exemple, la paroi de chaque élément de soutien radialement externe ou interne au sein de ladite structure peut avantageusement présenter au moins une cloison radiale de raidissement reliant entre elles les faces radialement interne et externe de cet élément de soutien. On notera que cette cloison radiale permet d'améliorer la résistance à la compression du dispositif selon l'invention, en roulage à plat ou à pression de gonflage réduite.

Egalement conformément à ce premier exemple, la paroi de chaque élément de soutien radialement interne au sein de ladite structure peut avantageusement présenter une embase radialement intérieure sensiblement en forme de trapèze isocèle, dont les deux côtés non parallèles s'étendent l'un vers l'autre radialement vers l'extérieur à partir de la face radialement interne de cet élément de soutien.

Ces deux côtés non parallèles de ladite embase peuvent :
- dans le cas d'une jante multiblocs à fond sensiblement plat, former des zones d'appui de chaque face latérale de ladite structure de soutien, lesdites cales de section axiale sensiblement en forme de trapèze étant respectivement appliquées contre ces zones d'appui, ou bien,
- dans le cas d'une jante multiblocs à creux circonférentiel dont les bords latéraux sont tous deux formés en contre-dépouille, être adaptés pour coopérer avec ces deux bords latéraux, lesdites cales étant appliquées radialement à l'extérieur de ladite embase.

Selon une autre caractéristique de l'invention, ladite structure de soutien peut se terminer radialement vers l'extérieur par une portion de protection à base de caoutchouc formant revêtement qui surmonte l'élément rigide de soutien radialement externe et qui déborde axialement de part et d'autre des faces latérales de ladite structure en recouvrant partiellement ces dernières. Cette portion de protection peut avantageusement être constituée d'un caoutchouc rigide, ou bien d'un composite caoutchouc souple / éléments de renforcement.

On notera que cette portion de protection en caoutchouc, de par son profil, permet non seulement de protéger la face radialement externe de la structure annulaire de soutien, mais en outre en partie les deux faces latérales de ladite structure. On notera également que cette portion de protection permet en outre de protéger l'enveloppe de pneumatique en roulage à l'état gonflé lors d'un choc par exemple, en cas de contact du dispositif avec les flancs ou le sommet de l'enveloppe.

Selon une autre caractéristique de l'invention, la face radialement interne de la paroi de ladite structure de soutien peut être emprisonnée dans la jante via ladite embase à fond plat logée entre les bords latéraux en contre-dépouille dudit creux de jante, ou bien via une patte d'ancrage asymétrique qui prolonge radialement vers l'intérieur le fond de l'embase et qui est adaptée pour venir s'ancrer dans une gorge formée entre deux desdits blocs de jante.

Selon une autre caractéristique de l'invention, lesdits secteurs d'anneau peuvent être avantageusement reliés deux à deux entre eux dans la direction circonférentielle par des moyens de connexion comportant un organe mâle qui est solidaire de l'une des extrémités circonférentielles de chaque secteur et qui est monté amovible dans un organe femelle qui est formé sur l'extrémité circonférentielle en regard du secteur adjacent, de telle sorte que le décalage axial entre lesdits secteurs soit minimisé lors d'un effort latéral appliqué à ladite structure.

Dans le cas d'une jante à fond plat (i.e. sans creux de jante), on notera que ces moyens de connexion permettent de reprendre une partie des efforts et de lutter ainsi contre le phénomène de « centrifugation » dû à l'effet centrifuge en roulage à l'état gonflé (i.e. en optimisant le calage radial des secteurs d'anneau).

Avantageusement, ledit organe mâle comporte une tige formant saillie se terminant par une patte axiale d'ancrage, et ledit organe femelle est formé d'une lumière comprenant une zone radialement inférieure de largeur axiale supérieure à celle de la patte et adaptée pour y enfoncer cette dernière, et une zone radialement supérieure de largeur axiale inférieure à celle de la patte et adaptée pour recevoir la tige en blocage axial et de préférence radial dans une position d'ancrage de la patte, suite à un soulèvement relatif du secteur incorporant cette dernière par rapport au secteur incorporant la lumière.

On notera que ces moyens de connexion permettent un montage aisé desdits secteurs de soutien via un déplacement réversible de l'organe mâle dudit orifice radialement inférieur audit orifice radialement supérieur, lequel reçoit en fonctionnement cet organe mâle en empêchant les secteurs ainsi reliés de se désolidariser les uns des autres.

De préférence, lesdits éléments rigides de soutien et lesdits moyens de connexion sont à base d'un matériau métallique, tel que de l'aluminium ou du titane, ou bien à base d'un matériau composite pouvant comprendre une matrice de résine (par exemple époxyde) renforcée par une armature de fibres de verre ou de carbone.

On notera que l'utilisation d'aluminium ou de titane ou bien d'un tel matériau composite permet d'abaisser encore la masse des dispositifs de roulage à plat selon l'invention.

Un ensemble monté sans chambre à air selon l'invention pour véhicule automobile comprend une jante de roue à plusieurs blocs, une enveloppe de pneumatique comportant des talons respectivement montés contre des rebords axialement interne et externe de ladite jante, et un dispositif de roulage à plat monté autour de ladite jante entre lesdits rebords, et cet ensemble monté est tel que ledit dispositif est tel que défini ci-dessus en relation avec la présente invention.

Selon un premier mode préférentiel de réalisation de l'invention, ladite jante est à fond sensiblement plat et ledit dispositif est alors tel que la paroi de chaque élément de soutien radialement interne au sein de ladite structure présente ladite embase sensiblement en forme de trapèze isocèle (dont les deux côtés non parallèles s'étendent l'un vers l'autre radialement vers l'extérieur à partir de la face radialement interne de cet élément de soutien, ces deux côtés formant des zones d'appui de chaque face latérale de la structure de soutien), lesdites cales étant respectivement appliquées contre ces zones d'appui.

Conformément à ce premier mode, lesdits moyens de blocage comportent avantageusement une paire de cales annulaires de section sensiblement trapézoïdale qui sont chacune à base de caoutchouc renforcé par un élément de renforcement circonférentiel et qui sont respectivement montées contre les deux faces latérales de ladite structure de soutien sensiblement de niveau avec la face radialement interne de cette dernière.

Selon ce premier mode préférentiel de l'invention, on notera que la souplesse axiale du dispositif de roulage à plat qui est monté autour de cette jante à fond sensiblement plat est essentiellement due à la combinaison de ces cales renforcées de type courroies trapézoïdales et de ladite couche élastique à base de caoutchouc séparant les éléments rigides de soutien entre eux.

Selon un second mode de réalisation de l'invention, ladite jante présente un creux circonférentiel à fond plat délimité axialement par deux bords latéraux en contre-dépouille, et ledit dispositif est tel que les deux côtés non parallèles de ladite embase coopèrent avec ces deux bords latéraux, lesdites cales étant appliquées radialement à l'extérieur de l'embase.

Selon ce second mode de l'invention, on notera que la souplesse axiale du dispositif de roulage à plat qui est monté autour de cette jante à creux circonférentiel est uniquement due à ladite couche élastique à base de caoutchouc.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
La figure 1 est une vue schématique partielle et en perspective d'un dispositif de roulage à plat selon un mode de réalisation de l'invention,
La figure 2 est vue en demi-coupe axiale d'un ensemble monté incorporant un dispositif de roulage à plat selon l'invention correspondant à une variante de réalisation de la figure 1, -
La figure 3 est une vue en demi-coupe axiale d'un ensemble monté incorporant un autre dispositif de roulage à plat selon l'invention correspondant à un autre mode de réalisation de l'invention,
Les figures 4, 5 et 6 sont respectivement trois vues en demi-coupe axiale d'ensembles montés incorporant des dispositifs de roulage à plat selon trois autres modes de réalisation de l'invention,
Les figures 7 et 8 sont des vues partielles en perspective montrant respectivement deux organes de connexion mâle et femelle dont sont pourvues les deux extrémités circonférentielles d'un secteur d'anneau d'un dispositif de roulage à plat selon les figures 1 et 2,
La figure 9 est une vue latérale d'un secteur d'anneau selon les figures 7 et 8 qui incorpore ainsi ces organes mâle et femelle à ses extrémités respectives, et
La figure 10 est une vue latérale de trois secteurs d'anneau selon la figure 9 qui forment une structure annulaire de soutien incluse dans le dispositif de l'invention selon les figures 1 et 2.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

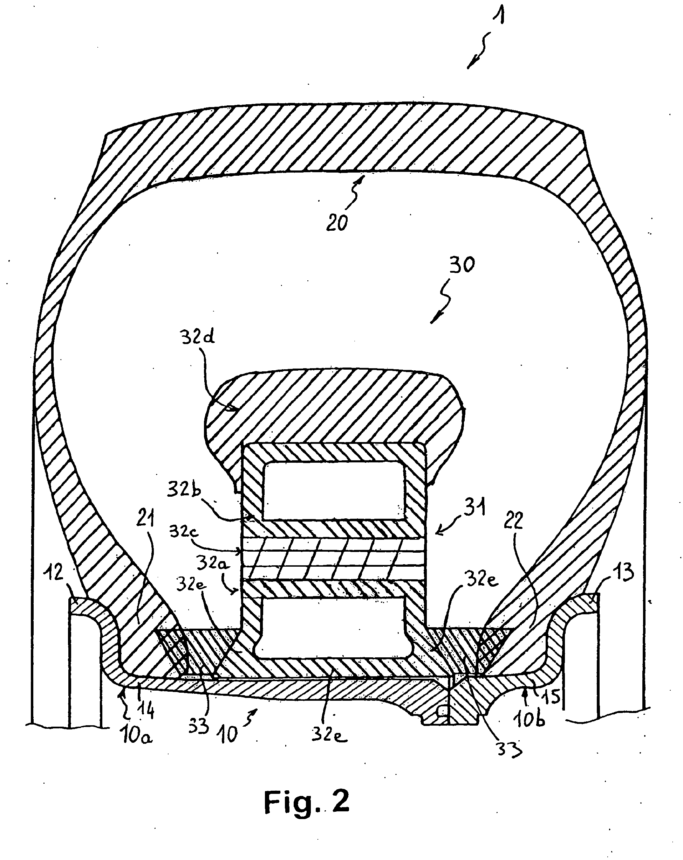

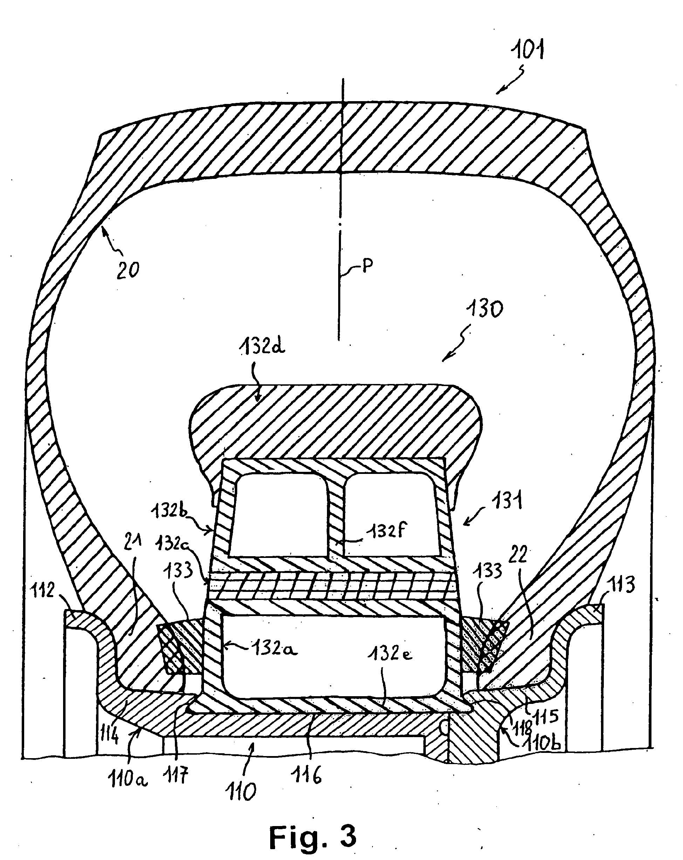

L'ensemble monté 1, 101 selon l'invention qui est illustré aux figures 2 et 3 comprend une jante de roue 10, 110 à deux blocs 10a et 10b, 110a et 110b solidarisés l'un avec l'autre par des moyens de fixation (non illustrés) de type boulons.

Les deux blocs 10a et 10b, 110a 110b comportent respectivement des rebords axialement interne et externe 12 et 13, 112 et 113 délimitant respectivement deux sièges de jante 14 et 15, 114 et 115 s'étendant axialement à partir des rebords 12 et 13, 112 et 113, une enveloppe de pneumatique 20 dont les talons 21 et 22 sont montés en appui sur les sièges 14 et 15, 114 et 115 contre les rebords 12 et 13, 112 et 113, et un dispositif de roulage à plat 30, 130 monté autour de la jante 10, 110 à l'intérieur de l'enveloppe 20 et destiné à soutenir celle-ci suite à une chute de pression de gonflage à l'intérieur de l'ensemble monté 1, 101.

Dans l'exemple de la figure 2, le dispositif de roulage à plat 30 selon le premier mode préférentiel de réalisation de l'invention est monté sur un fond de jante 10 de type sensiblement plat. Ce dispositif 30 comporte :
- une structure annulaire de soutien 31 qui est destinée à être montée sur la jante 10 en vue de soutenir l'enveloppe 20, suite à une chute de pression de gonflage à l'intérieur de l'ensemble monté 1, et qui est divisée en secteurs d'anneau qui sont connectés entre eux et qui sont adaptés pour former la structure 31 par juxtaposition dans la direction circonférentielle de cette dernière, et
- des moyens de blocage 33 des talons 21 et 22 contre les rebords 12 et 13 qui sont destinés à relier la structure 31 aux talons 21 et 22 et qui sont constitués d'une paire de cales annulaires d'un seul tenant à base de caoutchouc renforcé par un élément de renforcement circonférentiel (non illustré), ces cales 33 étant appliquées latéralement sur les secteurs 32 lors du montage du dispositif 30 sur la jante 10.

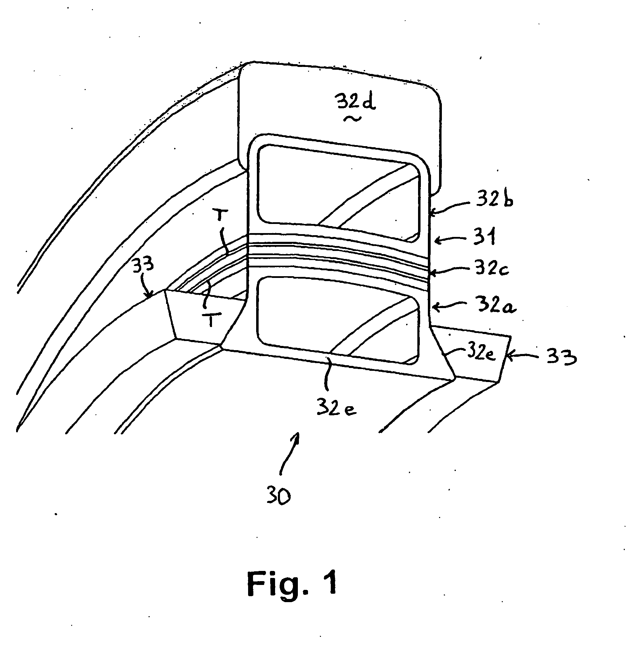

Plus précisément, chaque secteur d'anneau 32 comporte, dans l'exemple de réalisation des figures 1 et 2 :
- deux éléments rigides de soutien 32a et 32b métalliques et par exemple réalisés en aluminium, qui sont superposés dans la direction radiale de la structure 31 et qui sont séparés deux à deux entre eux par une couche élastique 32c à base de caoutchouc qui s'étend sur toute la largeur axiale des éléments 32a et 32b, lesquels présentent une paroi de section axiale sensiblement rectangulaire, et
- une portion de protection 32d en caoutchouc qui surmonte radialement l'élément de soutien 32b radialement supérieur et qui déborde axialement de part et d'autre des faces latérales de cet élément 32b en recouvrant partiellement ces dernières.

Cette couche élastique 32c peut être exclusivement constituée d'une composition de caoutchouc (voir figure 2), ou bien être formée en variante d'un composite caoutchouc / armature de renforcement métallique. Dans ce dernier cas qui est illustré à la figure 1, cette armature comporte avantageusement plusieurs tôles T en arc de cylindre qui sont prévues sensiblement parallèles aux faces radialement intérieure et extérieure de la couche élastique 32c.

Quant à cette portion de protection 32d, elle est constituée dans les exemples des figures 1 à 3 d'un caoutchouc de type rigide. On notera toutefois qu'elle pourrait être en variante constituée d'un composite caoutchouc souple / éléments de renforcement.

Comme cela est visible aux figures 1 et 2, l'élément rigide de soutien 32a radialement intérieur présente une embase 32e radialement intérieure sensiblement en forme de trapèze isocèle, dont les faces latérales formées par les deux côtés non parallèles du trapèze s'étendent l'une vers l'autre radialement vers l'extérieur à partir de la face radialement interne de cet élément 32a. Comme cela est visible à la figure 2, les cales trapézoïdales 33 sont respectivement appliquées sur ces faces latérales de l'embase 32e, de telle manière que les faces internes respectives de chaque élément 32a et des cales 33 soient sensiblement de niveau en étant montées sur le fond de jante 10.

A la figure 3 est illustré un dispositif de roulage à plat 130 selon un second mode de réalisation de l'invention. Ce dispositif 130 est monté sur un fond de jante 110 de type à creux circonférentiel 116 qui est délimité par des bords latéraux axialement interne et externe 117 et 118 tous deux en contre-dépouille et prolongeant les sièges de jante 114 et 115. Plus précisément, on voit que les bords 117 et 118 du creux 116 sont symétriques par rapport au plan circonférentiel médian P du dispositif 130. Ce creux de jante 116 est adapté pour recevoir en butée une partie radialement interne formant embase 132e de chaque secteur d'anneau 132 de la structure 131.

Comme illustré à la figure 3, cette embase 132e présente une hauteur radiale qui correspond sensiblement à l'épaisseur de la paroi de chaque secteur 132 et qui est ainsi inférieure à la hauteur radiale de l'embase 32e du dispositif 30 illustré à la figure 2.

Ce dispositif 130 selon le second mode de l'invention se distingue en outre essentiellement de celui de la figure 2, en ce que :
- l'élément rigide de soutien 132b radialement extérieur de chaque secteur 132 présente une paroi externe de section sensiblement trapézoïdale, dont les faces latérales s'étendent radialement vers l'extérieur et axialement l'une vers l'autre dans cet exemple et dont les deux faces radialement interne et externe sont reliées entre elles par une cloison radiale de raidissement 132f centrée sur ce plan P, et en ce que
- les moyens de blocage 133 sont constitués d'une paire de cales annulaires en caoutchouc qui peuvent être d'un seul tenant ou bien divisées en plusieurs secteurs d'anneau (ces cales 133 étant alors respectivement à base de caoutchouc non renforcé et étant collées sur cette structure 131).

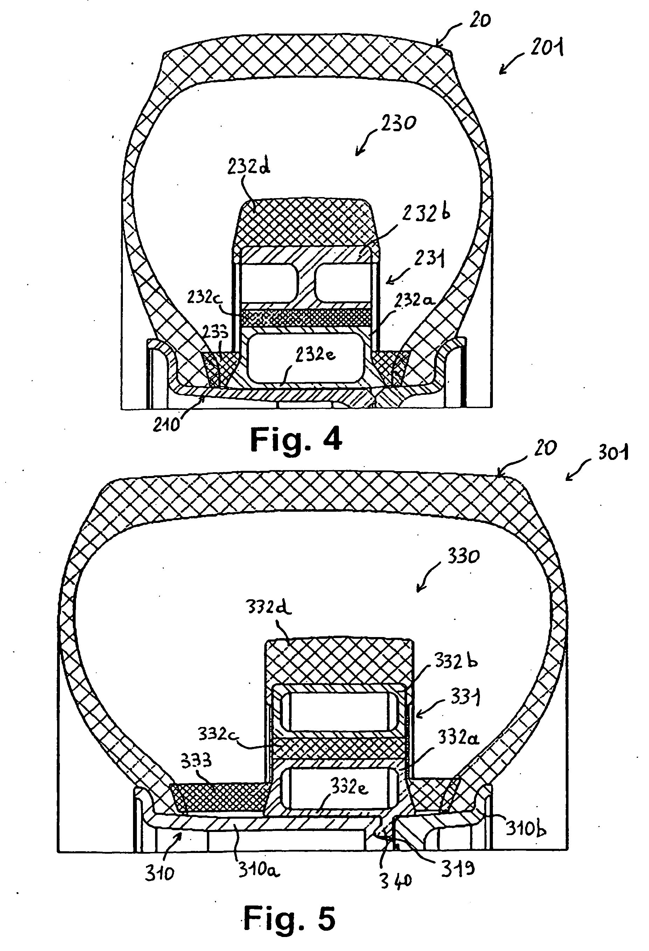

Le dispositif de roulage à plat 230 de la figure 4 se différencie essentiellement de celui de la figure 2, en ce que chaque élément rigide de soutien radialement extérieur 232b que comporte sa structure de soutien 231 présente une forme de « 1 » à extrémités allongées. Comme illustré à la figure 4, l'élément 232b de chaque secteur d'anneau est ainsi formé par deux bases horizontales qui s'étendent sensiblement sur toute la largeur axiale de la structure 231 et qui sont reliées entre elles par une partie radiale axialement médiane. Dans ce mode de réalisation de la figure 4, l'embase 232e de chaque élément de soutien radialement intérieur 232a est montée sur une jante 210 à fond plat pour donner l'ensemble monté 201, contrairement à la jante 110 de la figure 3 qui présentait le creux de jante 116.

Le dispositif de roulage à plat 330 de la figure 5 se différencie essentiellement de celui de la figure 3, en ce que chaque élément de soutien radialement intérieur 332a est pourvu d'une patte d'ancrage asymétrique 340 qui prolonge radialement vers l'intérieur le fond de l'embase 332e de cet élément 332a et qui est adaptée pour venir s'ancrer dans une gorge 319 formée entre les deux blocs 310a et 310b de la jante 310, pour donner l'ensemble monté 301.

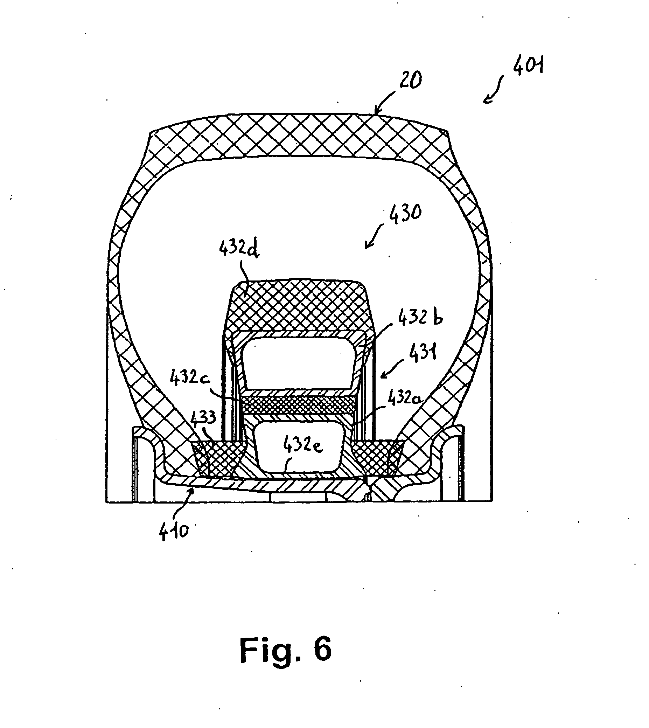

Le dispositif de roulage à plat 430 de la figure 6 se différencie essentiellement de celui de la figure 2, en ce que les éléments de soutien radialement intérieur 432a et les éléments de soutien radialement extérieur 432b présentent chacun une paroi en forme de trapèze isocèle dont la petite base définit la face radialement intérieure de l'élément 432a ou 432b correspondant. Comme illustré dans cet exemple de la figure 6, ces éléments trapézoïdaux 432a et 432b présentent ainsi des faces latérales se prolongeant mutuellement, de sorte que la face radialement interne de chaque élément 432a définit une largeur axiale minimale pour la structure de soutien 431, alors que la face radialement externe de chaque élément 432b définit une largeur axiale maximale pour cette structure 431.

On notera que cette structure de soutien 431 en forme de trapèze à petite et grande bases respectivement situées radialement à l'intérieur et à l'extérieur est particulièrement bien adaptée pour être montée sur une jante 410 de largeur réduite, et qu'elle permet alors de répartir la pression exercée sur l'enveloppe 20 en roulage à plat par le dispositif 430 sur une plus grande surface d'enveloppe 20, ce qui contribue à protéger davantage l'enveloppe 20.

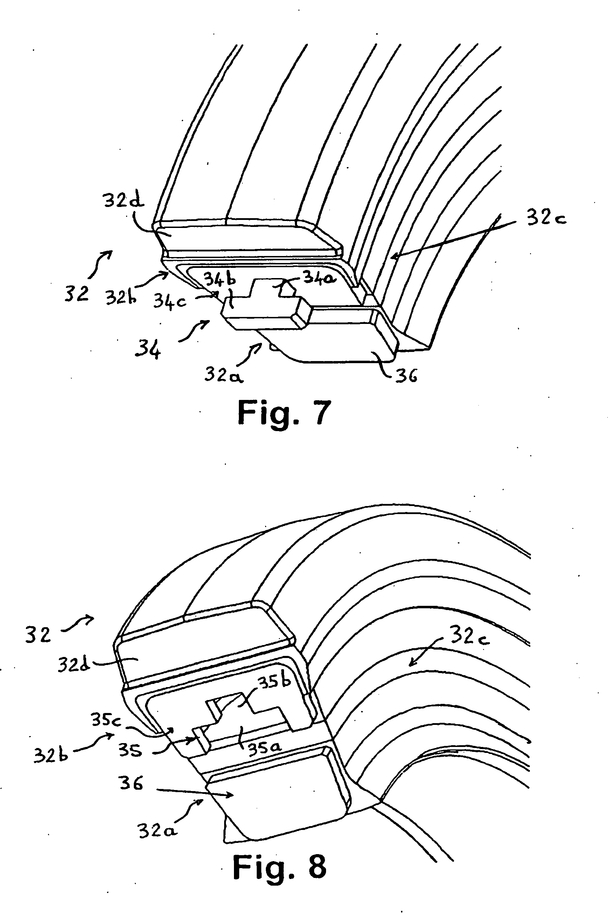

Les figures 7 et 8 illustrent respectivement un organe de connexion mâle 34 et un organe de connexion femelle 35 dont sont pourvues les deux extrémités respectives de chaque secteur d'anneau 32 de la structure annulaire 31 selon les figures 1 et 2, l'organe mâle 34 d'un secteur étant adapté pour venir s'ancrer à l'intérieur d'un organe femelle 35 d'un secteur 32 adjacent.

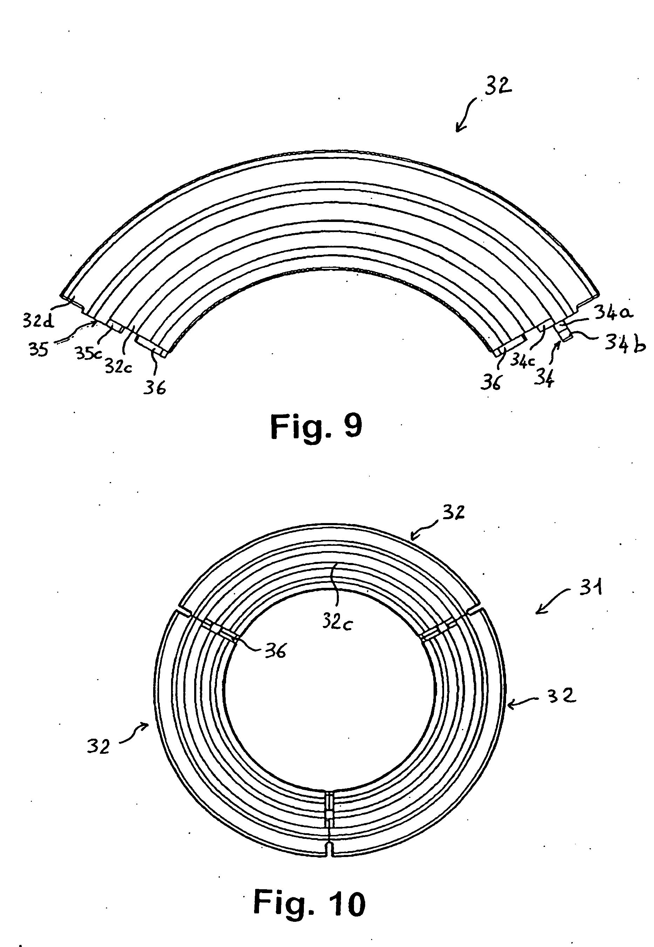

Comme illustré à la figure 7, l'organe mâle 34 est dans cet exemple constitué d'une saillie en forme de « T » comportant une tige 34a qui se termine par une patte axiale d'ancrage 34b et qui est fixée à une plaque de support mâle 34c métallique, laquelle est elle-même solidarisée avec l'une des deux extrémités circonférentielles (voir figure 9) de l'élément rigide de soutien radialement supérieur 32b de ce secteur 32, par exemple par soudage. Cette plaque de support 34c s'étend sensiblement sur toute la largeur axiale et la hauteur radiale de cet élément de soutien 32b, radialement au-dessus de la couche élastique 32c et au-dessous de la portion de protection 32d.

L'organe femelle 35 est formé d'une lumière à deux zones 35a et 35b qui est formée selon un plan axial dans une plaque de support femelle 35c métallique, laquelle est solidarisée avec l'autre extrémité circonférentielle (voir figure 9) de ce même élément rigide de soutien radialement supérieur 32b, par exemple par soudage. Cette plaque de support 35c s'étend sensiblement sur toute la largeur axiale et la hauteur radiale (lumière 35 exceptée) de l'élément de soutien 32b, radialement au-dessus de la couche élastique 32c et au-dessous de la portion de protection 32d.

La lumière 35 comprend, dans cet exemple de réalisation :
- une zone radialement inférieure 35a de largeur axiale supérieure à celle de la patte d'ancrage 34b et adaptée pour y enfoncer cette dernière, cette zone inférieure 35a formant l'entrée rectangulaire d'une cavité en arc de circonférence formée dans l'élément 32b, et
- une zone radialement supérieure 35b de largeur axiale inférieure à celle de la patte 34b et adaptée pour recevoir la tige 34a en blocage axial et radial dans une position d'ancrage de la patte 34a, suite à un soulèvement relatif du secteur incorporant cette dernière par rapport à celui incorporant la lumière 35, cette zone supérieure 35b formant également l'entrée rectangulaire d'une cavité en arc de circonférence et prolongeant radialement vers le haut la zone 35a selon une largeur axiale nettement plus réduite.

Comme illustré à la figure 8, la lumière de l'organe femelle 35 présente ainsi une forme de « T » inversé, pour l'ancrage de la patte 34a via le passage de la tige 34a en position enfoncée de la zone 35a à la zone 35b.

De plus, chaque extrémité circonférentielle d'un secteur 32 peut être en outre optionnellement pourvue d'une plaque inférieure de renforcement 36, qui est solidarisée (par exemple par soudage) avec l'élément rigide de soutien radialement inférieur 32a, radialement en dessous de la couche élastique 32c et donc de la plaque de support mâle ou femelle 34c ou 35c correspondante.

On notera que l'ensemble formé par la plaque de support mâle ou femelle 34c, 35c et par la plaque inférieure de renforcement 36 permet de conserver l'effet procuré par la couche élastique 32c, du fait que ces deux plaques 34c ou 35c et 36 sont formées radialement de part et d'autre de cette couche 32c, pour chaque secteur 32.

Comme illustré à la figure 10, l'assemblage de la structure annulaire de soutien 31 est réalisé en enfonçant l'organe mâle 34 d'une extrémité circonférentielle de chaque secteur 32 dans l'organe femelle 35 de l'extrémité circonférentielle en regard du secteur 32 adjacent, via le soulèvement radial précité de la patte d'ancrage 34b à l'intérieur de la lumière 35 pour son blocage axial et radial. On notera que ce déplacement de chaque patte d'ancrage 34b dans la lumière 35 correspondante est réversible, en vue de la désolidarisation mutuelle des secteurs 32 pour le démontage de la structure annulaire 31.

D'une manière générale pour l'ensemble des modes de réalisation précités, on notera que la couche élastique 32c à 432c de la structure annulaire 31 à 431 permet, par son cisaillement lors d'un effort ou d'un choc latéral, un léger déplacement axial au sein de chaque secteur 132 de l'élément de soutien radialement extérieur 32b à 432b par rapport à l'élément de soutien radialement intérieur 32a à 432a, et que les moyens de connexion 34, 35 permettent quant à eux, d'une part, de minimiser le déplacement axial des secteurs d'anneau 132 entre eux et, d'autre part, de répartir les efforts sur les secteurs d'anneau adjacents en cas de choc latéral sur une extrémité de secteur 132.

## Revendications

1. Dispositif de roulage à plat (30) destiné à équiper un ensemble monté (1) sans chambre à air pour véhicule automobile qui comporte une jante de roue (10) à plusieurs blocs et une enveloppe de pneumatique (20) comportant des talons (21 et 22) montés contre des rebords (12 et 13) de la jante, le dispositif comprenant :
- une structure annulaire de soutien (31) qui est destinée à être montée autour de la jante en vue de soutenir l'enveloppe, suite à une chute de pression de gonflage à l'intérieur de l'ensemble monté, et qui est divisée en au moins deux secteurs d'anneau (32) adaptés pour former ladite structure par juxtaposition dans la direction circonférentielle de cette dernière, et
- des moyens de blocage (33) desdits talons contre lesdits rebords qui sont destinés à relier ladite structure annulaire de soutien auxdits talons,
**caractérisé en ce que** lesdits secteurs d'anneau (32) sont reliés deux à deux entre eux dans la direction circonférentielle par des moyens de connexion (34, 35) comportant un organe mâle (34) qui est solidaire de l'une des extrémités circonférentielles de chaque secteur et qui est monté amovible dans un organe femelle (35) qui est formé sur l'extrémité circonférentielle en regard du secteur adjacent, de telle sorte que le décalage axial entre lesdits secteurs soit minimisé lors d'un effort latéral appliqué à ladite structure (131), ledit organe mâle comportant une saillie (34a) se terminant par une patte d'ancrage (34b), ledit organe femelle étant formé d'une lumière comprenant une zone radialement inférieure (35a) de largeur axiale supérieure à celle de ladite patte et adaptée pour y enfoncer cette dernière, et une zone radialement supérieure (35b) de largeur axiale inférieure à celle de ladite patte et adaptée pour recevoir ladite saillie en blocage axial dans une position d'ancrage de ladite patte, suite à un soulèvement relatif du secteur (32) incorporant cette dernière par rapport au secteur incorporant ladite lumière.

2. Dispositif de roulage à plat (30) selon la revendication 1,
**caractérisé en ce que** ladite saillie (34a) est formée sur une plaque de support mâle (34c) en l'une des extrémités circonférentielles de chaque secteur (32), et **en ce que** ladite lumière (35) est formée sur une plaque de support femelle (35c) en l'autre extrémité circonférentielle de chaque secteur.

3. Dispositif de roulage à plat (30) selon la revendication 1 ou 2, **caractérisé en ce que** ladite saillie (34a) est formée d'une tige et **en ce que** ladite patte (34b) est une patte axiale d'ancrage, de telle sorte que ledit organe mâle (34) présente une forme de « T ».

4. Dispositif de roulage à plat (30) selon une des revendications précédentes, **caractérisé en ce que** lesdits moyens de blocage (33) comportent au moins une paire de cales annulaires qui sont chacune à base de caoutchouc renforcé par un élément de renforcement circonférentiel et qui sont respectivement destinées à être montées au contact des deux faces latérales de ladite structure de soutien (31).

5. Dispositif de roulage à plat (30) selon la revendication 4,
**caractérisé en ce que** chacune desdites cales (33) est formée d'un seul tenant et comporte une face d'appui qui est appliquée contre une zone d'appui radialement intérieure de l'une desdites faces latérales de ladite structure de soutien (31).

6. Dispositif de roulage à plat (30) selon la revendication 5,
**caractérisé en ce que** chacune desdites cales (33) présente une section axiale sensiblement en forme de trapèze dont des petite et grande bases définissent respectivement des faces radialement intérieure et extérieure desdits moyens de blocage.

7. Ensemble monté (1) sans chambre à air pour véhicule automobile, comprenant une jante de roue (10) à plusieurs blocs (10a et 10b,), une enveloppe de pneumatique (20) comportant des talons (21 et 22) respectivement montés contre des rebords axialement interne et externe (12 et 13) de ladite jante, et un dispositif de roulage à plat (30) monté autour de ladite jante entre lesdits rebords, **caractérisé en ce que** ledit dispositif est tel que défini à l'une des revendications précédentes.

8. Ensemble monté (1) selon la revendication 7, **caractérisé en ce que** ladite jante (10) est à fond sensiblement plat.

9. Ensemble monté (101) selon la revendication 7, **caractérisé en ce que** ladite jante (110) présente un creux circonférentiel (116) à fond plat délimité axialement par deux bords latéraux en contre-dépouille (117 et 118), qui sont destinés à coopérer avec une embase radialement intérieure en forme de trapèze isocèle que présente chaque secteur (32).

## Claims

1. A run flat device (30) for fitting to a tubeless wheel assembly (1) for a motor vehicle, the assembly comprising a wheel rim (10) made up of a plurality of blocks (10a) and a tire cover (20) having beads (21 and 22) mounted against flanges (12 and 13) of said rim, said device comprising:
an annular support structure (31) for mounting around the wheel rim in order to support said cover after a drop in the inflation pressure inside the wheel assembly, and subdivided into at least two ring sectors (32) adapted to form said structure by being juxtaposed in the circumferential direction thereof; and
locking means (33) for locking said beads against said flanges in order to connect said annular support structure to said beads;
the run flat device being **characterized in that** ring sectors (32) are interconnected in pairs in the circumferential direction by connection means (34, 35) comprising a male member (34) secured to one of the circumferential ends of each sector and removably mounted in a female member (35) that is formed in the facing circumferential end of the adjacent sector in such a manner that the axial offset between said sectors is minimized in the event of a lateral force being applied to said structure (131), said male member comprising a projection (34a) terminated by an anchor tab (34b), said female member being constituted by a slot having a radially lower zone (35a) of axial width greater than the axial width of the tab and adapted to have the tab pushed therein, and a radially upper zone (35b) of axial width less than that of said tab and adapted to receive said projection axially locked in a position for anchoring said tab, after the sector (32) incorporating said tab has been raised relative to the sector incorporating said slot.

2. A run flat device (30) according to claim 1, **characterized in that** said projection stem (34a) is formed by a male support plate (34c) at one of the circumferential ends of each sector (32), and **in that** said slot (35) is formed by a female support plate (35c) at the other circumferential end of each sector.

3. A run flat device (30) according to claim 1 or claim 2, **characterized in that** said projection (34a) is formed by a stem, and **in that** said tab (34b) is an axial anchor tab, such that said male member (34) presents a T-shape.

4. A run flat device (30) according to any preceding claim, **characterized in that** said locking means (33) comprise at least one pair of annular wedges, each based on rubber reinforced by a circumferential reinforcing element and serving respectively to be mounted in contact with two side faces of said support structure (31).

5. A run flat device (30) according to claim 4, **characterized in that** each of said wedges (33) is formed as a single piece, having a bearing face that is pressed against a radially inner bearing zone of one of said side faces of said support structure (31).

6. A run flat device (30) according to claim 5, **characterized in that** each of said wedges (33) presents an axial section that is substantially trapezoidal in shape with its short and long bases respectively defining the radially inner and the radially outer faces of said locking means.

7. A tubeless wheel assembly (1) for a motor vehicle, the assembly comprising a wheel rim (10) comprising a plurality blocks (10a & 10b), a tire cover (20) having beads (21 & 22) mounted respectively against axially inner and outer flanges (12 & 13) of said rim, and a run flat device (30) mounted around said rim between said flanges, the assembly being **characterized in that** said device is as defined in any preceding claim.

8. A wheel assembly (1) according to claim 7, **characterized in that** said rim (10) has a substantially flat rim band.

9. A wheel assembly (101) according to claim 7, **characterized in that** said rim (110) presents a flat-bottomed circumferential recess (116) axially defined by two undercut side edges (117 & 118), that are designed to co-operate with a radially inner base in the form of an isosceles trapezoid presented by each sector (32).

## Patentansprüche

1. Notlaufvorrichtung (30), die dazu bestimmt ist, eine montierte Baugruppe (1) ohne Luftkammer für ein Kraftfahrzeug auszurüsten, die eine Radfelge (10) mit mehreren Blöcken und einen pneumatischen Mantel (20) aufweist, der Mantelwülste (21 und 22) hat, die gegen die Felgeränder (12 und 13) montiert sind, wobei die Vorrichtung aufweist:
- eine ringförmige Stützstruktur (31), die dazu bestimmt ist, um die Felge im Hinblick auf das Stützen des Mantels nach einem Abfall eines Aufblasdrucks im Inneren der montierten Baugruppe montiert zu sein, und die in zumindest zwei Ringbereiche (32) unterteilt ist, die angepasst sind, die Struktur durch Nebenordnung in der Umfangsrichtung von dieser auszubilden, und
- eine Blockiereinrichtung (33) der Mantelwülste gegen die Felgeränder, die dazu bestimmt ist, die ringförmige Stützstruktur mit den Mantelwülsten zu verbinden,
**dadurch gekennzeichnet, dass** die Ringbereiche (32) paarweise miteinander in der Umfangsrichtung durch eine Verbindungseinrichtung (34, 35) verbunden sind, die ein männliches Element (34) aufweist, das mit einem der Umfangsenden von jedem Bereich fest verbunden ist und lösbar in einem weiblichen Element (35) montiert ist, das an dem Umfangsende in Bezug auf den benachbarten Bereich ausgebildet ist, in einer solchen Weise, dass der Axialversatz zwischen den Bereichen bei einer Seitenkraft, die auf die Struktur (131) aufgebracht ist, minimiert ist, wobei das männliche Element einen Vorsprung (34a) aufweist, der in einem Verankerungsfuß (34b) endet, wobei das weibliche Element aus einer Öffnung gebildet ist, die ein radial unteres Gebiet (35a) mit einer Axialbreite größer als die des Fußes, das dazu geeignet ist, um mit dem letztgenannten dort einzudringen, und ein radial oberes Gebiet (35b) mit einer Axialbreite kleiner als die des Fußes aufweist, das angepasst ist, den Axialblockiervorsprung im Anschluss an ein relatives Anheben des Bereiches (32), der diesen aufweist, in Bezug auf den Bereich, der die Öffnung aufweist, in einer Verankerungsposition des Fußes aufzunehmen.

2. Notlaufvorrichtung (30) nach Anspruch 1, **dadurch gekennzeichnet, dass** der Vorsprung (34a) an einer männliche Stützplatte (34c) in einem der Umfangsenden von jedem Bereich (32) ausgebildet ist und dass die Öffnung (35) an einer weiblichen Stützplatte (35c) in dem anderen Umfangsende von jedem Bereich ausgebildet ist.

3. Notlaufvorrichtung (30) nach Anspruch 1 oder 2, **dadurch gekennzeichnet, dass** der Vorsprung (34a) aus einem Stab gebildet ist und dass der Fuß (34b) ein Axialverankerungsfuß in der Weise ist, dass das männliche Element (34) eine T-Form aufweist.

4. Notlaufvorrichtung (30) nach einem der vorhergehenden Ansprüche, **dadurch gekennzeichnet, dass** die Blockiereinrichtung (33) zumindest ein Paar an Ringkeilen aufweist, die jeweils auf Kautschuk verstärkt durch ein Umfangsverstärkungselement basieren und jeweils dazu bestimmt sind, in Berührung mit zwei Seitenfläche der Stützstruktur (31) montiert zu sein.

5. Notlaufvorrichtung (30) nach Anspruch 4, **dadurch gekennzeichnet, dass** jeder der Keile (33) aus einem einzigen Träger gebildet ist und eine Abstützfläche aufweist, die gegen einen radial inneren Abstützungsbereich von einer der Seitenflächen der Stützstruktur (31) aufgebracht ist.

6. Notlaufvorrichtung (30) nach Anspruch 5, **dadurch gekennzeichnet, dass** jeder der Keile (33) einen Axialbereich im Wesentlichen in Form eines Trapezes aufweisen, dessen kleine und große Grundlinien jeweils radial innere und äußere Flächen der Blockiereinrichtung definieren.

7. Montierte Baugruppe (1) ohne Luftkammer für ein Kraftfahrzeug, die eine Radfelge (10) mit mehreren Blöcken (10a und 10b), einen pneumatischen Mantel (20), der Mantelwülste (21 und 22) aufweist, die jeweils gegen axial innere und äußere Felgeränder (12 und 13) montiert sind, und eine Notlaufvorrichtung (30) aufweist, die um die Felge zwischen den Felgeränder montiert ist, **dadurch gekennzeichnet, dass** die Vorrichtung eine solche ist, wie diese in den vorhergehenden Ansprüche definiert ist.

8. Montierte Baugruppe (1) nach Anspruch 7, **dadurch gekennzeichnet, dass** die Felge (10) am Boden im Wesentlichen eben ist.

9. Montierte Baugruppe (101) nach Anspruch 7, **dadurch gekennzeichnet, dass** die Felge (110) einen Umfangshohlraum (116) mit ebenem Boden aufweist, der in Axialrichtung durch zwei hinterschnittene Seitenkanten (117 und 118) begrenzt ist, die dazu bestimmt sind, mit einem radial inneren Unterteil in Form eines gleichschenkligen Trapezes, das jeder Bereich (32) aufweist, zusammenzuwirken.
